# EUROPÄISCHE PATENTSCHRIFT

(11) **EP 0 481 275 B1**
(45) Veröffentlichungstag und Bekanntmachung des Hinweises auf die Patenterteilung: **27.07.1994**
(21) Anmeldenummer: 91116673.4
(22) Anmeldetag: 30.09.1991
(51) Int. Cl.: B23Q 3/155

(54) **Werkzeugwechsler für Werkzeuge einer Werkzeugmaschine**
Machine tool with tool changing device
Dispositif de changement d'outil pour une machine-outil

(30) Priorität: 09.10.1990 DE 4031996
(43) Veröffentlichungstag der Anmeldung: 22.04.1992
(73) Patentinhaber: CHIRON-WERKE GMBH & CO. KG, 78532 Tuttlingen (DE)
(72) Erfinder: Rütschle, Eugen, Dipl.-Ing., W-7200 Mühlheim (DE); Haninger, Rudolf, W-7201 Seitingen-Oberflacht (DE)
(74) Vertreter: Witte, Alexander, Dr.-Ing.

(56) Entgegenhaltungen:
- EP-A- 0 035 952
- DD-A- 139 805
- DE-U- 8 905 795
- FR-A- 1 577 424
- GB-A- 2 085 400
- US-A- 4 211 123
- SOVIET PATENTS ABSTRACTS Section PQ, Week 4130, 2. September 1981 Derwent Publications Ltd., London, GB; Class P56, AN 81-G9440D & SU-A-776 863 (POGREMUSHKIN A P) 7. November 1980

## Beschreibung

Die Erfindung betrifft einen Werkzeugwechsler für Werkzeuge einer Werkzeugmaschine, mit einem Greifer, an dem zwei bewegliche Backen zum formschlüssigen Ergreifen der Werkzeuge angeordnet sind, an dem ein mediumsbetätigter Schubkolben in Längsrichtung axialverschieblich gelagert ist, der die Backen um ihre jeweilige Schwenkachse in eine Spreizstellung zum Ein- und Ausführen der Werkzeuge bzw. in eine Schließstellung zum formschlüssigen Ergreifen der Werkzeuge verschwenkt, und an dem zwischen dem Schubkolben und jeder der beiden Backen je ein Öffnungsgetriebe und je ein Schließgetriebe angeordnet sind, von denen jedes der beiden Öffnungsgetriebe je eine an dem Schubkolben vorgesehene schräge Stirnfläche aufweist, die zum Öffnen der jeweiligen Backe mit einer an der Backe vorgesehenen Gegenfläche zusammenwirkt, und von denen jedes der beiden Schließgetriebe je eine an dem Schubkolben vorgesehene Führungsschräge aufweist, die zum Schließen der jeweiligen Backe jeweils mit einer an der Backe angeordneten Anlagefläche zusammenwirkt, wobei die Backen in der Schließstellung formschlüssig verriegelt sind.

Ein derartiger Werkzeugwechsler ist aus der GB-A-2 085 400 bekannt.

Der bekannte Werkzeugwechsler weist einen Greifer mit zwei beweglichen Backen auf, wobei ein axialverschieblich gelagerter, einseitig mediumsbetätigter Schubkolben vorgesehen ist. Der Schubkolben verspannt unter der Kraft einer Schließfeder die Backen in die Schließstellung. Ferner ist ein gesonderter Keilblock vorgesehen, der in der Schließstellung der Backen unter der Kraft einer zweiten Feder in Anlage mit an den Backen vorgesehenen Vorsprüngen ist und die Backen formschlüssig verriegelt.

Die beiden Backen sind an dem Schubkolben mit geringem Spiel zwangsgeführt, so daß die Hin- und Herbewegung des Schubkolbens zwangsweise in die Schwenkbewegung der Backen umgesetzt wird.

Zum Öffnen der Backen wird die sich zwischen dem Schubkolben und dem Keilblock ausbildende Kammer mit einem Druckmittel beaufschlagt, wodurch zuerst der Keilblock außer Eingriff mit den Backen gebracht wird, bevor der Schubkolben gegen die Kraft der Schließfeder die Backen in ihre Spreizstellung verschwenkt. Wird die Druckmittelbeaufschlagung weggenommen, bewegt sich der Schubkolben unter der Wirkung der Schließfeder wieder in seine Ausgangslage zurück und verschwenkt dabei die Backen in ihre Schließstellung. Danach schließlich wird der Keilblock durch die zweite Feder in die Verriegelungslage gedrückt.

Bei dem bekannten Greifer müssen die beiden Federn in ihrer Kraftwirkung aufeinander so abgestimmt werden, daß beim mediumsbetätigten Öffnen des Greifers die zweite Feder zuerst zusammengedrückt wird, während beim federkraftbetätigten Schließen zuerst die erste Feder die Backen schließen muß.

Aus der US-PS 4 211 123 ist ein Greifer bekannt, bei dem ein doppeltwirkender mediumsbetätigter Schubkolben jeweils über eine Zwangsführung die jeweilige Backe in ihre Spreizstellung bzw. in ihre Schließstellung verschwenkt.

Ein weiterer Werkzeugwechsler ist aus der DE-OS 3 717 201 bekannt.

Wie der eingangs beschriebene Werkzeugwechsler findet auch dieser in modernen Werkzeugmaschinen, insbesondere sog. Bearbeitungszentren, Verwendung, in denen an einer Vielzahl von Werkstücken nacheinander programmgesteuert eine Vielzahl von Bearbeitungsschritten ausgeführt wird. Die verschiedenen Werkzeuge werden in diesen Werkzeugmaschinen in einem Magazin in der Nähe des Spindelstockes bereitgehalten, so daß beim Wechsel von einem Bearbeitungsschritt zum nächsten das zuvor benutzte Werkzeug mittels eines Greifers ausgewechselt und ein neues Werkzeug für den nächsten Bearbeitungsschritt aus dem Magazin in die Spindel eingesetzt werden kann. Der bekannte Werkzeugwechsler weist dazu einen beweglichen Arm und einen an dem freien Ende des Armes angeordneten Greifer auf.

Der bekannte Greifer ist mit zwei festen Backen versehen, die derart im Abstand zueinander angeordnet sind, daß das jeweilige Werkzeug formschlüssig zwischen diesen festen Backen axial geführt wird. Weiterhin sind an dem bekannten Greifer zwei bewegliche Backen vorgesehen, die in ihrer Schließstellung das zwischen den festen Backen aufgenommene Werkzeug formschlüssig umgreifen. In der Spreizstellung der beweglichen Backen kann das jeweilige Werkzeug aus den feststehenden Backen entnommen bzw. zwischen diese eingeführt werden.

Das Öffnen der beweglichen Backen erfolgt über einen Betätigungsknopf, der zu diesem Zweck gegen einen an der Werkzeugmaschine vorgesehenen raumfesten Anschlag gefahren wird. Der Betätigungsknopf ist federbelastet, so daß beim Verlassen des raumfesten Anschlages der Betätigungsknopf in seine Ruhelage zurückgedrückt wird, in der er die beweglichen Backen in ihrer Schließstellung hält.

Der Betätigungsknopf ist mit einem als Betätigungsorgan für die beweglichen Backen ausgebildeten Bolzen verbunden, wobei zwischen dem Bolzen und jeder der beiden beweglichen Backen je ein Öffnungsgetriebe und ein Schließgetriebe vorgesehen sind. Der Bolzen weist an seinem Außenumfang vier Führungsschrägen auf, die in Längsrichtung des Bolzens und radial von innen nach außen verlaufen. Die Führungsschrägen wirken je über eine Kugel mit an den Backen vorgesehenen Anlageflächen zusammen. Die Führungsschrägen sind einander paarweise zugeordnet und derart ausgebildet, daß in den beiden axialen Endstellungen des Bolzens jeweils zwei Kugeln in die Führungsschrägen eintreten und die beiden anderen Kugeln aus den Führungsschrägen austreten. Diese Radialbewegung der Kugeln beim axialen Verschieben des Bolzens wird dazu ausgenutzt, die beweglichen Backen zwischen der Schließstellung und der Spreizstellung zwangsweise hin- und herzubewegen.

Aus dem Gesagten wird deutlich, daß je zwei entgegengesetzt verlaufende Führungsschienen mit einer der beweglichen Backen zusammenwirken. Die eine Führungsschräge ist dabei Teil des Öffnungsgetriebes während die andere Führungsschräge Teil des Schließgetriebes ist. In der Schließstellung der Backen liegen die beiden radial nach außen getretenen Kugeln der beiden Schließgetriebe einerseits an der Außenumfangsfläche des Bolzens und andererseits an der Anlagefläche der jeweiligen Backe an, so daß sie die Backen formschlüssig verriegeln. Die Kraft der den Betätigungsknopf vorspannenden Druckfeder wirkt dabei einer evtl. von außen auf die Backen ausgeübten Kraft zum Überführen derselben in die Spreizstellung entgegen.

Die Haltekraft der beweglichen Backen wird folglich durch die Spannkraft der Druckfeder bestimmt.

Bei dem bekannten Greifer ist es von Nachteil, daß die Öffnungs- und Schließgetriebe konstruktiv aufwendig sind und außerdem wegen der zwangsweise Betätigung der Backen justierbar ausgelegt sein müssen, um ein Verklemmen des gesamten Betätigungsmechanismus zu verhindern. Weiterhin ist es nachteilig, daß bei einem Nachlassen der Spannkraft der Feder die Haltekraft des bekannten Greifers zurückgeht, bzw. beim Bruch der Feder völlig verloren geht. Um den bei einem Herausfallen des Werkzeuges aus dem Greifer möglichen Schaden an der Werkzeugmaschine zu begrenzen, sind an dem bekannten Greifer zusätzlich die festen Backen vorgesehen, die das Werkzeug zumindest in axialer Richtung festlegen. Doch auch dies führt zu einem unerwünscht hohen konstruktiven Aufwand.

Weiterhin ist die Betätigung der Öffnungsgetriebe mittels eines raumfesten Anschlages in vielen Fällen unerwünscht. Insbesondere bei hochgenau arbeitenden Werkzeugmaschinen führt das Anfahren des raumfesten Anschlages zu ungewollten Verspannungen und Erschütterungen, welche die Arbeitsgenauigkeit der Werkzeugmaschine nachteilig beeinflussen.

Ferner ist aus der DD-PS 149 331 ein Werkzeugwechsler bekannt, dessen Greifer zwei bewegliche Backen aufweist, die über einen Kniehebelmechanismus zwangsweise geöffnet bzw. geschlossen werden. Der Kniehebelmechanismus wird über eine Schubstange betätigt, die durch eine Druckfeder in die Schließstellung der Backen vorgespannt ist. Zum Überführen der Backen in die Spreizstellung ist ein Hydraulikkolben vorgesehen, welcher die Schubstange gegen die Kraft der Feder verschiebt.

Auch bei diesem Greifer ist also die Haltekraft durch die Spannkraft einer Druckfeder bestimmt. Auch hier besteht die Gefahr, daß die Feder erschlafft oder bricht, was insbesondere bei schnellen und ruckartigen Bewegungen des Werkzeugwechslers dazu führen kann, daß das gehaltene Werkzeug aus dem Greifer herausfliegt und Schäden an der Werkzeugmaschine verursacht.

Bei diesem Greifer ist es von Nachteil, daß der Kniehebelmechanismus im Laufe der Zeit ausschlägt, so daß die Werkzeuge nur noch mit Spiel gehalten werden.

Wegen der zwangsweisen Führung durch den Kniehebelmechanismus ist auch bei diesem Greifer eine Justierung des Betätigungsmechanismus erforderlich, um zu verhindern, daß dieser verklemmt. Darüberhinaus ist der konstruktive Aufbau wegen der erforderlichen Zahl der Gelenke sehr aufwendig.

Der Erfindung liegt daher die Aufgabe zugrunde, einen Werkzeugwechsler der eingangs genannten Art dahingehend weiterzubilden, daß bei einfachem Aufbau eine sichere Funktion des Werkzeugwechslers gewährleistet ist, der also wartungsarm und auch bei üblichem Verschleiß noch betriebssicher ist. Außerdem soll das Werkzeug auch bei schnellen und ruckartigen Bewegungen stets sicher in dem Greifer gehalten sein und die Arbeitsgenauigkeit der Werkzeugmaschine durch das Öffnen und Schließen des Greifers nicht beeinträchtigt werden.

Diese Aufgabe wird erfindungsgemäß dadurch gelöst, daß der Schubkolben als doppeltwirkender mediumsbetätigter Schubkolben ausgebildet ist, die schrägen Stirnflächen der Öffnungsgetriebe zum Öffnen mit den Gegenflächen in Anlage bringbar sind, die Führungsschrägen der Schließgetriebe über einen zugeordneten Wälzkörper mit der jeweiligen Anlagefläche zusammenwirken und die schrägen Stirnflächen während des Schließens und in der Schließstellung der Backen außer Eingriff mit den Gegenflächen sind, wobei die beiden Schließgetriebe die Backen in der Schließstellung selbsthemmend verriegeln.

Die der Erfindung zugrundeliegende Aufgabe wird auf diese Weise vollkommen gelöst. Weil das Öffnen und Schließen der Backen über einen doppeltwirkenden mediumsbetätigten Schubkolben bewirkt wird, ist keine Feder mehr erforderlich, welche die Backen in ihre Schließstellung vorspannt, so daß sämtliche mit einer Feder verbundenen Nachteile vermieden werden. Die Backen werden vielmehr durch den hydraulisch oder mit Druckluft angetriebenen Schubkolben geschlossen gehalten.

Weil ferner das Öffnungsgetriebe während des Schließens sozusagen außer Funktion gesetzt ist, erfolgt keine dauernde Zwangsführung der Backen, so daß auf eine Justierung verzichtet werden kann. Da die Schrägflächen während des Schließens außer Eingriff mit den Gegenflächen sind, kann der gesamte Betätigungsmechanismus des Greifers nicht verklemmen. All dies führt zu einem konstruktiv einfachen Aufbau des erfindungsgemäßen Werkzeugwechslers. Besonders vorteilhaft ist dabei, daß zum Öffnen der Backen die an der Kolbenstange vorgesehenen Schrägflächen lediglich mit den Gegenflächen an den Backen in Anlage gebracht werden müssen. Die Öffnungsgetriebe sind damit sozusagen als einfache Schubgetriebe ausgebildet; durch den Druck der Schrägflächen auf die Gegenflächen werden die Backen in ihre Spreizstellung geschwenkt. Auch dies trägt zu dem konstruktiv einfachen Aufbau des Greifers bei.

Besonders von Vorteil ist es bei diesem Ausführungsbeispiel, daß die beiden Schließgetriebe die Backen in der Schließstellung selbsthemmend verriegeln, wodurch das Werkzeug auch bei einem Ausfall der Hydraulik oder der Druckluft noch sicher in dem Greifer gehalten ist.

Weiterhin ist es bevorzugt, wenn der Wälzkörper eine Walze ist, die in einer in der jeweiligen Backe parallel zu deren Schwenkachse verlaufenden Bohrung steckt, in der die Walze radial gesichert ist, wobei die Bohrung mit ihrer Innenwand die Anlagefläche ausbildet, und wenn die Bohrung einen parallel zu der Schwenkachse verlaufenden durchgehenden Längsschlitz aufweist, durch den hindurch die Walze zumindest in der Schließstellung über einen Abschnitt ihrer Umfangsfläche mit der jeweils zugeordneten Führungsschräge in Anlage ist.

Diese Maßnahme ist besonders vorteilhaft, weil die Walze auf konstruktiv einfache Weise sicher gehalten wird. Andererseits stellt die Halterung der Walze gleichzeitig die Anlagefläche des Schließgetriebes dar, was ebenfalls unter konstruktiven Gesichtspunkten vorteilhaft ist.

Bei diesem Ausführungsbeispiel ist es weiterhin bevorzugt, wenn in jeder Backe ein die Bohrung quer anschneidender, auf die jeweils andere Backe zu offener Kanal vorgesehen ist, in den die Kolbenstange mit ihrem von dem Schubkolben wegweisenden freien Ende hineinragt, und wenn das freie Ende der Kolbenstange an seinen beiden den Walzen zugekehrten Seiten die Führungsschrägen aufweist, die von dem Schubkolben weg unter einem Winkel zu der Längsrichtung schräg nach außen verlaufen, wobei der Winkel kleiner als 15°, vorzugsweise kleiner als 10° ist.

Diese Maßnahmen sind besonders vorteilhaft, weil einerseits ein großer Teil der Umfangsfläche der Walzen für die Führungsschrägen zugänglich ist, andererseits aber die Walzen trotzdem sicher radial in der Bohrung gehalten sind. Zudem wird durch die schräg nach außen verlaufenden Führungsschrägen auf einfache Weise dafür gesorgt, daß die Backen in der Schließstellung selbsthemmend verriegelt sind. Der Winkel, den die Führungsschrägen mit der Längsrichtung der Kolbenstange einschließen, ist nämlich so klein, daß er unterhalb des materialabhängigen Reibungswinkels zwischen der Führungsschräge und der Umfangsfläche der Walze liegt.

Weiterhin ist es bevorzugt, wenn die Führungsschrägen in Richtung des Schubkolbens allmählich in radial nach innen gewölbte Ausnehmungen übergehen, in denen die Walzen in der Spreizstellung der Backen zu liegen kommen.

Durch diese Maßnahmen wird auf konstruktiv einfache Weise dafür gesorgt, daß die Walzen beim Öffnen der Backen von den Führungsschrägen freikommen, so daß ein Verklemmen des Greifers vermieden wird.

Darüberhinaus ist es bevorzugt, wenn die Kolbenstange an ihrer von dem Schubkolben wegweisenden Stirnfläche die Schrägflächen aufweist, und wenn die an den Backen vorgesehenen Gegenflächen in etwa radial zu der Drehachse der jeweiligen Backe ausgerichtet sind.

Durch diese Maßnahme wird das als Schubgetriebe wirkende Öffnungsgetriebe auf konstruktiv einfache Weise so realisiert, daß schon geringe Hübe und Kräfte ausreichen, um die Backen zu öffnen. Die Kolbenstange muß lediglich mit ihrer Stirnfläche gegen die Gegenflächen der Backen gefahren werden, die wegen ihrer zu der Drehachse der Backe radialen Ausrichtung die gesamte Anlagekraft der Stirnfläche in eine Kraft zum Öffnen bzw. Verschwenken der Backen umsetzen.

Bei diesem Ausführungsbeispiel ist es darüberhinaus bevorzugt, wenn die Stirnfläche der Kolbenstange ballig ausgebildet ist, und wenn die Gegenflächen in dem jeweiligen Kanal angeordnet sowie der Stirnfläche entsprechend gewölbt sind.

Auf diese ebenfalls konstruktiv sehr einfache Weise wird eine zentrierende Wirkung zwischen den Gegenflächen und der Stirnfläche erreicht, so daß keine Querkräfte auftreten, welche die Öffnungskraft vermindern würden.

Weiterhin ist es bevorzugt, wenn jede Backe eine Anschlagfläche aufweist, die je mit einem verstellbaren Anschlag zusammenwirkt, um die Schließbewegung der Backen zu begrenzen.

Diese Maßnahme hat den Vorteil, daß Beschädigungen des Werkzeuges durch eine zu hohe Schließkraft des Schubkolbens vermieden werden. Darüberhinaus wird verhindert, daß der Greifer selbst beschädigt wird, wenn er geschlossen wird, ohne ein Werkzeug aufgenommen zu haben.

Weiterhin ist es bevorzugt, wenn jeder der Backen ein Kontrollorgan zur Anzeige der jeweiligen Stellung der Backe zugeordnet ist.

Auf diese Weise ist es möglich, zu kontrollieren, ob die Backen in der Spreizstellung oder in der Schließstellung sind, so daß eine mögliche Fehlfunktion der Hydraulik oder des Druckluftantriebes erkannt werden kann.

Weiterhin ist es bevorzugt, wenn das Kontrollorgan einen induktiven Näherungsgeber aufweist.

Diese Maßnahme ist konstruktiv besonders einfach, da die Backen aus Metall gefertigt sind, so daß ein Verschwenken der Backen durch den induktiv wirkenden Geber unmittelbar erfaßt werden kann.

Darüberhinaus ist es bei diesem Ausführungsbeispiel bevorzugt, wenn der Schubkolben zumindest einen in Längsrichtung verlaufenden und in der Nähe der Führungsschrägen mündenden Kanal zur Versorgung der Wälzkörper mit einem Schmiermittel aufweist, wobei der Kanal im Betrieb des Greifers verschlossen ist.

Durch diese Maßnahme wird in vorteilhafter Weise eine einfache Wartung des Greifers möglich. Der in dem Schubkolben vorgesehene Kanal muß zur Schmierung der Walzen lediglich geöffnet werden, was bspw. durch das Herausschrauben einer in ihm steckenden Madenschraube möglich ist, um Fett und/oder Öl in den Bereich der Walzen zu bringen.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Draufsicht auf einen Greifer eines erfindungsgemäßen Werkzeugwechslers, in Schließstellung, mit gestrichelt angedeuteter Spreizstellung;
- Fig. 2: eine geschnittene Darstellung des Greifers aus Fig. 1, und zwar in der Ebene II-II aus Fig. 1;
- Fig. 3: eine geschnittene Darstellung des Greifers aus Fig. 1, und zwar in der Ebene III-III aus Fig. 2;
- Fig. 4: eine Darstellung ähnlich Fig. 3, jedoch in Spreizstellung.

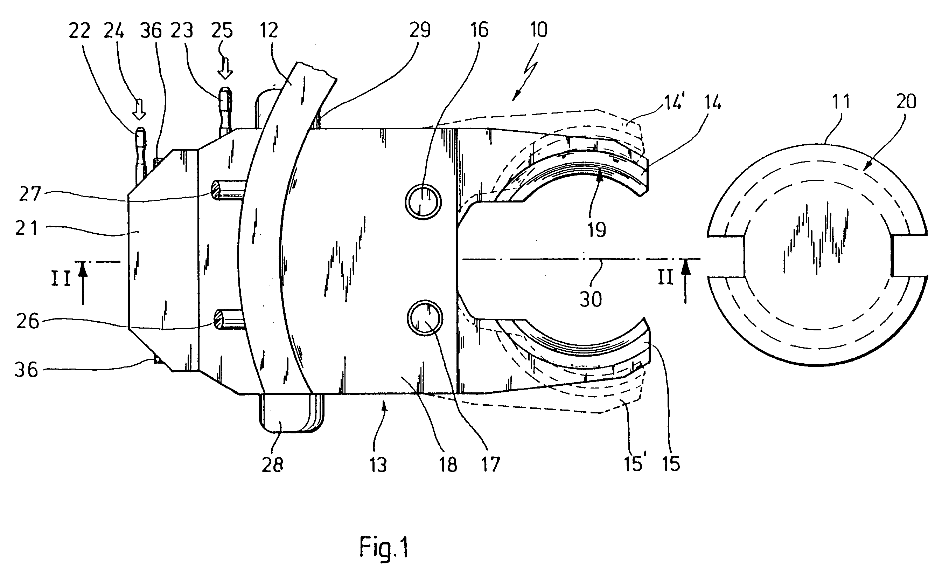

In Fig. 1 bezeichnet 10 insgesamt einen Werkzeugwechsler, der zum Ergreifen und Halten eines bei 11 schematisch angedeuteten Werkzeuges vorgesehen ist. Ein Arm 12 des Werkzeugwechslers 10 ist in Fig. 1 nur abgebrochen dargestellt, er verläuft im allgemeinen zunächst schräg und dann senkrecht aus der Zeichenebene der Fig. 1 heraus, während ein Greifer 13 des Werkzeugwechslers 10 sich in der Zeichenebene erstreckt.

Mit 14 und 15 sind zwei bewegliche Backen des Greifers 13 bezeichnet, die sich in Fig. 1 in ihrer Schließstellung befinden. Die Backen 14 und 15 sind um ihre bei 16 und 17 angedeuteten Schwenkachsen so verschwenkbar, daß sie ihre Spreizstellung einnehmen. Die sich in Spreizstellung befindlichen Backen 14′ und 15′ sind in Fig. 1 gestrichelt dargestellt. Wie zu erkennen ist, bewegen sich die Backen 14 und 15 beim Übergang in ihre gestrichelt dargestellte Spreizstellung seitlich auseinander, wobei sie teilweise aus dem Greifer 13 bzw. aus dessen bei 18 angedeutetem Gehäuse austreten.

Die Backen 14 und 15 sind gebogen ausgeführt und weisen ein axiales Profil 19 auf, welches an das Werkzeug 11 angepaßt ist, das mit einem entsprechenden axialen Profil 20 versehen ist. Die Abmaße sind derart getroffen, daß die Backen 14 und 15 das Werkzeug 11 in ihrer Schließstellung formschlüssig halten, wie dies an sich bekannt ist und im Rahmen der vorliegenden Erfindung nicht nochmals erläutert zu werden braucht.

Der Greifer 13 weist an seinem von den Backen 14 und 15 abgelegenen hinteren Ende 21 zwei Oliven 22 und 23 auf, die zum Versorgen des Greifers 13 mit Druckluft oder Hydrauliköl dienen. Die Olive 22 wird in Richtung eines bei 24 angedeuteten Pfeiles mit Medium beaufschlagt, um die Backen 14 und 15 in noch näher zu beschreibender Weise zu öffnen, während die Olive 23 in Richtung eines bei 25 angedeuteten Pfeiles beaufschlagt wird, um die Backen 14 und 15 in ebenfalls noch zu beschreibender Weise zu schließen.

Aus dem hinteren Ende 21 des Greifers 13 führen in der Nähe des Armes 12 zwei Anschlüsse heraus, die mit nicht näher dargestellten induktiven Näherungsschaltern 26 und 27 verbunden sind, die zur noch näher zu erläuternden Anzeige der Stellung der Backen 14 und 15 dienen.

Weiterhin sind in Fig. 1 zwei an dem Greifer 13 vorgesehene seitliche Abdeckkappen 28 und 29 zu erkennen, die abnehmbar ausgestaltet sind und noch zu beschreibende Einstellschrauben verdecken, die als Anschlag für die in der Schließstellung befindlichen Backen 14 und 15 dienen.

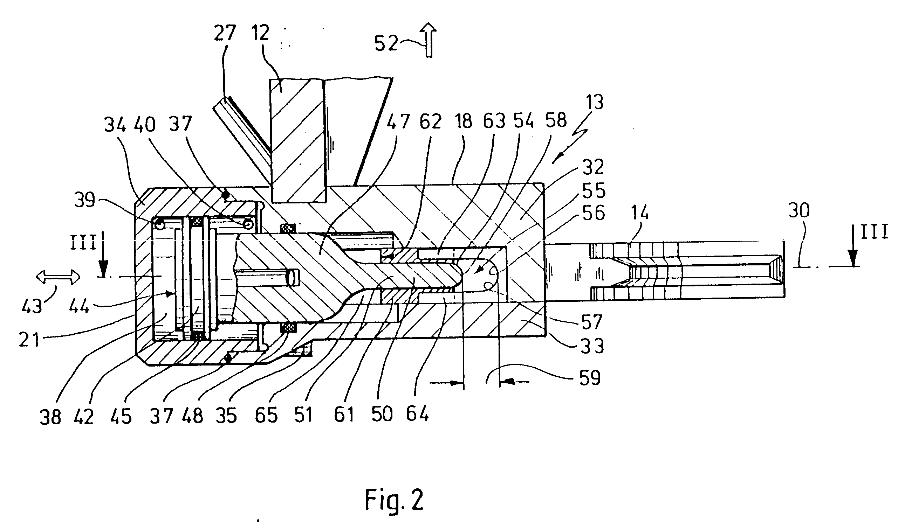

In Fig. 2 ist der Greifer 13 in einer Schnittdarstellung entlang einer Ebene II-II dargestellt, in welcher der Greifer 13 mit seiner bei 30 angedeuteten Längsrichtung liegt. Es ist zu erkennen, daß das Gehäuse 18 des Greifers 13 eine Deckelplatte 32, eine Bodenplatte 33 und eine an dem hinteren Ende 21 des Greifers 13 angeordnete Kappe 34 aufweist.

Die Deckelplatte 32 und die Bodenplatte 33 sind mittels einer bei 35 angedeuteten Schraube miteinander verbunden, während die Kappe 34 mit Hilfe von in Fig. 1 zu erkennenden Schrauben 36 an die Deckelplatte 32 bzw. die Bodenplatte 33 angeschraubt ist. Zwischen der Kappe 34 und der Deckelplatte 32 sowie der Bodenplatte 33 ist ein Dichtring 37 angeordnet, so daß in dem Greifer 13 ein nach außen druckdicht abgeschlossener Innenraum 38 ausgebildet ist.

Der Innenraum 38 ist über Bohrungen 39 und 40 mit den in Fig. 1 zu erkennenden Oliven 22 bzw. 23 verbunden. In dem Innenraum 38 ist längsverschieblich ein Schubkolben 42 gelagert, der in Richtung eines bei 43 angedeuteten Doppelpfeiles hin- und herbewegbar ist. Durch Einleiten von Druckluft durch die Bohrung 39 wird der Schubkolben 42 in Fig. 2 nach rechts bewegt, während er nach links bewegt wird, wenn Druckluft über die Bohrung 40 in den Innenraum 38 eingeführt wird. Die zu diesem Zweck erforderliche Führung und Abdichtung des Schubkolbens 42 erfolgt an seinem hinteren Ende 44 mittels eines bei 45 angedeuteten O-Ringes und ist an sich bekannt, so daß sie hier nicht weiter erläutert zu werden braucht.

Der Schubkolben 42 weist einen von seinem hinteren Ende 44 wegzeigenden Schaft 47 auf, der zwischen der Deckelplatte 32 und der Bodenplatte 33 mittels einer bei 48 angedeuteten O-Ring/Stütz-Ring-Anordnung in ebenfalls bekannter Weise druckdicht längsverschieblich geführt ist.

An seinem vorderen Ende 50 ist der Schubkolben 42 mit einer Kolbenstange 51 verbunden, die in einer bei 52 angedeuteten Richtung quer zu der Längsrichtung 30 des Greifers 13 gegenüber dem Schaft 47 verjüngt ist. Die an ihrer Stirnseite 54 ballig ausgebildete Kolbenstange 51 ragt in einen Kanal 55 hinein, der bezogen auf die Querrichtung 52 etwa mittig in der Backe 14 verläuft. Der Kanal 14 weist eine in Fig. 2 rechts gelegene vordere gewolbte Wand 56 auf, die als Gegenfläche 57 an die Stirnseite 54 der Kolbenstange 51 angepaßt ist. Beim Verschieben des Schubkolbens 42 in Fig. 2 nach rechts wirkt die Stirnseite 54 sozusagen als mit 58 bezeichnete Schrägfläche mit der Gegenfläche 57 im Sinne eines dffnungsgetriebes zusammen und verschwenkt die Backe 14 in ihre Spreizstellung. Zu diesem Zweck muß der in Fig. 2 in der Schließstellung gezeigte Schubkolben 42 einen bei 59 angedeuteten Hub ausführen.

In Fig. 2 ist ebenfalls eine hinter der Kolbenstange 51 angeordnete Walze 61 zu erkennen, die in einer bei 62 angedeuteten Bohrung steckt, die in der Backe 14 vorgesehen ist. Die Bohrung 62 wird von dem Kanal 55 quer angeschnitten, so daß der Kanal 55 zwischen seiner oberen Kanalwand 63 und seiner unteren Kanalwand 64 die Walze 61 teilweise zugänglich macht. Die Walze 61 ist axial durch die Deckelplatte 32 sowie die Bodenplatte 33 und radial durch die Bohrung 62 gesichert.

Fig. 2 ist weiter zu entnehmen, daß sich die Backe 14 mit ihrem inneren Ende 65 bis hinter den Schaft 47 des Schubkolbens 42 erstreckt.

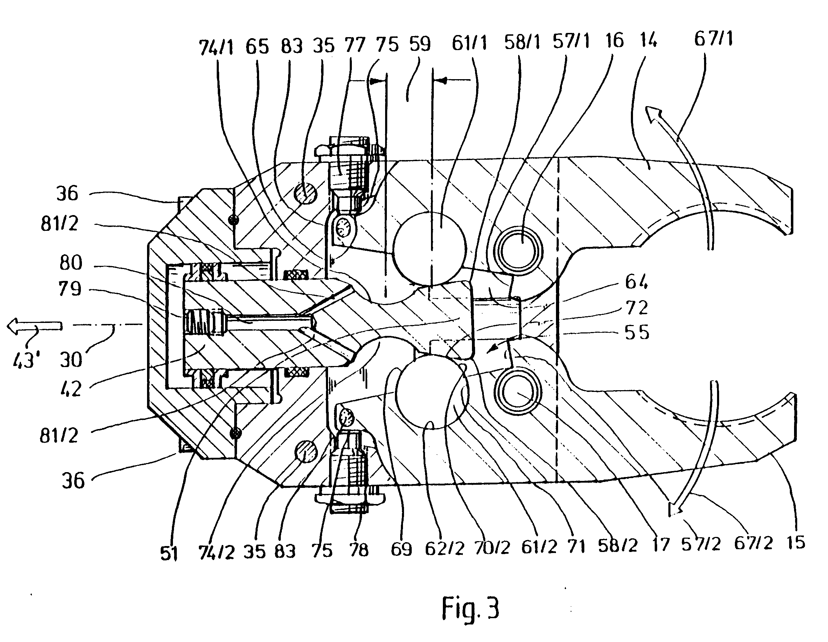

In Fig. 3 ist der Greifer 13 entlang der Linie III-III aus Fig. 2 geschnitten dargestellt, so daß die obere Kanalwand 63 nicht zu erkennen ist, während die untere Kanalwand 64 unter der Kolbenstange 51 gestrichelt angedeutet ist. Wenn der Schubkolben 42 und damit die Kolbenstange 51 in Fig. 3 nach rechts verfahren wird, nämlich durch Einleiten von Druckluft oder Öl in die Olive 22, gelangt die Stirnseite 54 mit ihren Schrägflächen 58/1 und 58/2 mit den Gegenflächen 57/1 bzw. 57/2 der Backen 14 bzw. 15 in Anlage und verschwenkt die Backen 14 und 15 in Pfeilrichtung 67/1 bzw. 67/2. Es ist zu erkennen, daß die Gegenflächen 57/1 und 57/2 radial zu den Schwenkachsen 16 bzw. 17 ausgerichtet sind, so daß die Andruckkraft der Stirnseite 54 unmittelbar in die Schwenkbewegung der Backen 14 und 15 umgesetzt wird.

In der geschnittenen Darstellung in Fig. 3 ist zu erkennen, daß die Walze 61/2 mit ihrem Umfangsabschnitt 69 durch einen parallel zu der Schwenkachse 16 bzw. 17 verlaufenden Schlitz aus der Bohrung 62 herausragt, während sie mit ihrem Umfangsabschnitt 70/2 in den Kanal 55 hineinweist. Zu mehr als 50 % ihrer Umfangsfläche ist die Walze 61/2 gänzlich von der Bohrung 62/2 umgeben, die somit als Anlagefläche 71 für die Walze 61/2 wirkt und diese radial sichert.

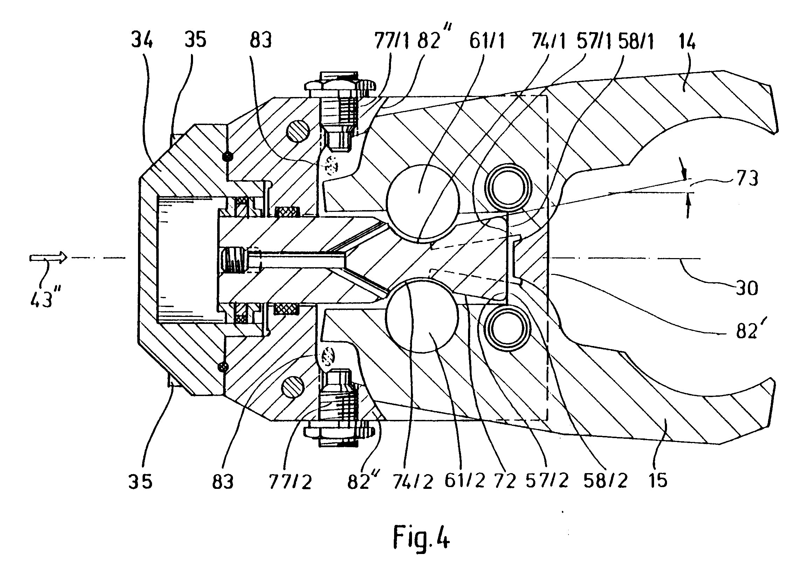

Andererseits liegt die Walze 61/2 in der in Fig. 3 gezeigten Schließstellung der Backen 14 und 15 mit einem Teil ihrer Umfangsabschnitte 69 bzw. 70 an einer Führungsschräge 72 an, die seitlich an der Kolbenstange 51 vorgesehen ist. Die Führungsschräge 72 läuft in Richtung der Stirnseite 54 schräg nach außen und schließt mit der Längsrichtung 30 der Kolbenstange 51 einen in Fig. 4 bei 73 angedeuteten Winkel an, der ca. 6° beträgt. Die Führungsschräge 72 geht in Richtung des Schubkolbens 42 in eine radial nach innen gewölbte Ausnehmung 74/2 über, in welcher die Walze 61/2 zu liegen kommt, wenn die Kolbenstange den Hub 59 ausführt.

Wie in Fig. 3 weiter zu erkennen ist, sind die Backen 14 und 15 sowie die Kolbenstange 51 spiegelbildlich zu der Längsrichtung 30 ausgebildet, so daß die jeweiligen Merkmale der Übersichtlichkeit halber jeweils im Zusammenhang mit einer der beiden Backen 14 oder 15 beschrieben werden.

In Fig. 3 ist zwischen den Backen 14 und 15 kein Werkzeug 11 aufgenommen. Die in der Schließstellung gezeigten Backen 14 und 15 liegen an ihren inneren Enden 65 je mit einer Anschlagfläche 75 an einem Anschlag 77 an, der von einer verstellbaren Schraube 78 gebildet ist. Die Schrauben 78 werden im Betrieb von den in Fig. 1 gezeigten Abdeckkappen 28 und 29 verdeckt.

Weiterhin ist zu erkennen, daß in dem Schubkolben 42 ein von einer Madenschraube 79 verschlossener in Längsrichtung verlaufender Kanal 80 vorgesehen ist, der sich in zwei Seitenkanäle 81 verzweigt. Die Seitenkanäle 81 münden im Bereich der Ausnehmungen 74. Nach dem Entfernen der Kappe 34 und der Madenschraube 79 kann über die Kanäle 80 und 81 ein Schmierstoff in den Bereich der Walzen 61/1 und 61/2 eingebracht werden.

Die Backen 14 und 15 sind in Längsrichtung 30 außer durch ihre Schwenkachsen 16 und 17 auch durch Gehäuseteile 82′ und 82˝ geführt, die zur Entlastung der Schwenkachsen 16 und 17 vorgesehen sind. Das vordere Gehäuseteil 82′ ist Teil der Deckelplatte 32 während die hinteren Gehäuseteile 82˝ Teile der Bodenplatte 33 sind.

Die bereits erwähnten induktiven Näherungsschalter 26 und 27 sind in der Zeichnung nicht weiter dargestellt, es ist lediglich bei 83 ihr Meßfleck angedeutet. In der Schließstellung aus Fig. 3 liegt der Meßfleck auf den inneren Enden 65 der Backen 14 und 15 während er in der in Fig. 4 gezeigten Spreizstellung der Backen 14 und 15 neben den inneren Enden 65 liegt. Da die Backen 14 und 15 aus Metall gefertigt sind, geben die induktiven Näherungsgeber unterschiedliche Signale ab, je nachdem, ob die Backen 14 und 15 in ihrer Spreizstellung oder in ihrer Schließstellung sind bzw. in diese Stellungen überführt werden.

In der in Fig. 4 gezeigten Spreizstellung der Backen 14 und 15 befinden sich die Walzen 61/2 sowie 61/1 in den Ausnehmungen 74/2 bzw. 74/1 der Kolbenstange 51. Die Schrägflächen 58/1 und 58/2 sind mit den Gegenflächen 57/1 bzw. 57/2 der Backen 14 bzw. 15 in Anlage und halten dadurch die Backen 14 und 15 geöffnet. Der Schubkolben 42 übt folglich eine Kraft in Richtung des Pfeiles 43˝ aus.

Zum Schließen der Backen 14 und 15 wird Druckluft oder ein sonstiges geeignetes Medium über die Olive 23 in den Innenraum 38 des Greifers 13 eingeleitet. Dadurch wird der Kolben 42 in Richtung des Pfeiles 43′ aus Fig. 3 bewegt, und die Schrägflächen 38 kommen von den Gegenflächen 57 frei. Beim weiteren Zurückbewegen des Schubkolbens 42 in Richtung des Pfeiles 43′ wandern die Walzen 61 aus den Ausnehmungen 74 heraus und nehmen dabei die inneren Enden 65 der Backen 14 und 15 mit, da die Walzen 61 radial in den Bohrungen 62 gehalten sind. Die Walzen 61 gelangen schließlich auf die Führungsschrägen 72 und wandern an diesen entlang, bis die Schließbewegung der Backen 14 und 15 zum Erliegen kommt. Dieser Mechanismus ist also selbstnachstellend, auch bei ausgeschlagenen Schwenkachsen 16, 17 wird der Greifer 13 sicher und reproduzierbar geschlossen. Dies geschieht dadurch, daß die Backen 14 und 15 mit ihrem axialen Profil 19 ein Werkzeug 11 ergriffen haben, und daß die Backen 14 und 15 andererseits mit ihren Anschlagflächen 75 in Anlage mit den verstellbaren Anschlägen 77 gelangen. Jede Backe 14, 15 ist so zwischen Anschlag 77 und Werkzeug 11 bzw. Schwenkachse 16, 17 verspannt.

Durch die einstellbaren Anschläge 77 wird sichergestellt, daß die Backen 14, 15 ein Werkzeug 11 immer zentrisch ergreifen. Andererseits wird durch das Verspannen der Backen 14, 15 gegen die Anschläge 77 dafür gesorgt, daß die Kolbenstange 51 bei geschlossenem Greifer 13 keine Querkräfte aufnehmen muß.

In beiden Fällen werden die Walzen 61 zwischen den Anlageflächen 71 der Bohrungen 62 einerseits und den Führungsschrägen 72 andererseits verspannt.

Auch wenn jetzt der über die Olive 23 in dem Inneren 38 erzeugte Druck abfällt, kann über eine von außen versuchte Schwenkbewegung der Backen 14 und 15 in Richtung der Pfeile 67 die Kolbenstange 51 und damit der Schubkolben 42 nicht bewegt werden. Der Winkel 73 der Schrägflächen gegenüber der Längsachse 30 ist mit 6° so gering, daß der von der Schrägfläche 72, der Walze 61 und der Anlagefläche 71 jeweils gebildete Schließmechanismus selbsthemmend wirkt. Mit anderen Worten ist der materialabhängige Reibungswinkel zwischen Walze 61 und Führungsschräge 72 bzw. Walze 61 und Anlagefläche 71 größer als der Keilwinkel, den der Winkel 73 darstellt. Das Schließgetriebe ist folglich eine Art Keilgetriebe, bei dem Selbsthemmung auftritt.

Der Greifer 13 ist lediglich dadurch zu öffnen, daß über die Olive 22 in dem Innenraum 38 ein Überdruck erzeugt wird, der den Schubkolben 42 in Richtung des Pfeiles 43˝ verschiebt.

## Patentansprüche

1. Werkzeugwechsler (10) für Werkzeuge (11) einer Werkzeugmaschine, mit einem Greifer (13), an dem zwei bewegliche Backen (14, 15) zum formschlüssigen Ergreifen der Werkzeuge (11) angeordnet sind, an dem ein mediumsbetätigter Schubkolben (42) in Längsrichtung axialverschieblich gelagert ist, der die Backen um ihre jeweilige Schwenkachse (16, 17) in eine Spreizstellung zum Ein- und Ausführen der Werkzeuge (11) bzw. in eine Schließstellung zum formschlüssigen Ergreifen der Werkzeuge (11) verschwenkt, und an dem zwischen dem Schubkolben (42) und jeder der beiden Backen (14, 15) je ein Öffnungsgetriebe (58, 57) und je ein Schließgetriebe (71, 72) angeordnet sind, von denen jedes der beiden Öffnungsgetriebe (58, 57) je eine an dem Schubkolben (42) vorgesehene schräge Stirnfläche (58) aufweist, die zum Öffnen der jeweiligen Backe (14, 15) mit einer an der Backe vorgesehenen Gegenfläche (57) zusammenwirkt, und von denen jedes der beiden Schließgetriebe (71, 72) je eine an dem Schubkolben (42) vorgesehene Führungsschräge (72) aufweist, die zum Schließen der jeweiligen Backe (14, 15) jeweils mit einer an der Backe (14, 15) angeordneten Anlagefläche (71) zusammenwirkt, wobei die Backen (14, 15) in der Schließstellung formschlüssig verriegelt sind, dadurch gekennzeichnet, daß der Schubkolben (42) als doppeltwirkender mediumsbetätigter Schubkolben (42) ausgebildet ist, die schrägen Stirnflächen (58) der Öffnungsgetriebe (58, 57) zum Öffnen mit den Gegenflächen (57) in Anlage bringbar sind, die Führungsschrägen (72) der Schließgetriebe (71, 72) über einen zugeordneten Wälzkörper (61) mit der jeweiligen Anlagefläche (71) zusammenwirken, und die schrägen Stirnflächen (58) während des Schließens und in der Schließstellung der Backen (14, 15) außer Eingriff mit den Gegenflächen (57) sind, wobei die beiden Schließgetriebe (71, 72) die Backen (14, 15) in der Schließstellung selbsthemmend verriegeln.

2. Werkzeugwechsler nach Anspruch 1, dadurch gekennzeichnet, daß der Wälzkörper (61) eine Walze (61) ist, die in einer in der jeweiligen Backe (14, 15) parallel zu deren Schwenkachse verlaufenden Bohrung (62) steckt, in der die Walze (61) radial gesichert ist, wobei die Bohrung (62) mit ihrer Innenwand die Anlagefläche (71) ausbildet, und daß die Bohrung (62) einen parallel zu der Schwenkachse (16, 17) verlaufenden durchgehenden Längsschlitz aufweist, durch den hindurch die Walze (61) zumindest in der Schließstellung über einen Abschnitt (69) ihrer Umfangsfläche mit der jeweils zugeordneten Führungsschräge (72) in Anlage ist.

3. Werkzeugwechsler nach Anspruch 2, dadurch gekennzeichnet, daß in jeder Backe (14, 15) ein die Bohrung (62) quer anschneidender auf die jeweils andere Backe (15, 14) zu offener Kanal (55) vorgesehen ist, in den die Kolbenstange (51) mit ihrem von dem Schubkolben (42) wegweisenden freien Ende (50) hineinragt, und daß das freie Ende (50) der Kolbenstange (51) an seinen beiden den Walzen (61) zugekehrten Seiten die Führungsschrägen (72) aufweist, die von dem Schubkolben (42) weg unter einem Winkel (73) zu der Längsrichtung (30) schräg nach außen verlaufen, wobei der Winkel (73) kleiner als 15°, vorzugsweise kleiner als 10° ist.

4. Werkzeugwechsler nach Anspruch 3, dadurch gekennzeichnet, daß die Führungsschrägen (72) in Richtung des Schubkolbens (42) allmählich in radial nach innen gewölbte Ausnehmungen (74) übergehen, in denen die Walzen (61) in der Spreizstellung der Backen (14, 15) zu liegen kommen.

5. Werkzeugwechsler nach einem der Ansprüche 1 bis 4, dadurch gekennzeichnet, daß die Kolbenstange (51) an ihrer von dem Schubkolben wegweisenden Stirnseite (54) die schrägen Stirnflächen (58) aufweist und daß die an den Backen (14, 15) vorgesehenen Gegenflächen (57) in etwa radial zu der Schwenkachse (16, 17) der jeweiligen Backe (14, 15) ausgerichtet sind.

6. Werkzeugwechsler nach den Ansprüchen 3 und 5, dadurch gekennzeichnet, daß die Stirnseite (54) der Kolbenstange (51) ballig ausgebildet ist und daß die Gegenflächen (57) in dem jeweiligen Kanal (55) angeordnet sowie der Stirnseite (54) entsprechend gewölbt sind.

7. Werkzeugwechsler nach einem der Ansprüche 1 bis 6, dadurch gekennzeichnet, daß jede Backe (14, 15) eine Anschlagfläche aufweist, die je mit einem verstellbaren Anschlag (77) zusammenwirkt, um die Schließbewegung der Backen (14, 15) zu begrenzen.

8. Werkzeugwechsler nach einem der Ansprüche 1 bis 7, dadurch gekennzeichnet, daß jeder der Backen (14, 15) ein Kontrollorgan (26, 27) zur Anzeige der jeweiligen Stellung der Backe (14, 15) zugeordnet ist.

9. Werkzeugwechsler nach Anspruch 8, dadurch gekennzeichnet, daß das Kontrollorgan (26, 27) einen induktiven Näherungsgeber (26, 27) aufweist.

10. Werkzeugwechsler nach einem der Ansprüche 1 bis 9, dadurch gekennzeichnet, daß der Schubkolben (42) zumindest einen in Längsrichtung (30) verlaufenden und in der Nähe der Führungsschrägen (72) mündenden Kanal (80, 81) zur Versorgung der Wälzkörper (61) mit einem Schmiermittel aufweist, wobei der Kanal (80) im Betrieb des Greifers (13) verschlossen ist.

## Claims

1. Tool changer (10) for tools (11) of a machine tool, with a gripper (13) on which two movable jaws (14, 15) are arranged for positive gripping of the tools (11), on which a medium-actuated thrust piston (42) is mounted such that it is axially displaceable in a longitudinal direction, said piston rod swinging the jaws around their respective pivot axis (16, 17) into a spread position for inserting and removing the tools (11) and into a closed position for positive gripping of the tools (11), respectively, and on which are arranged, between the thrust piston (42) and each of the two jaws (14, 15), one opening linkage (58, 57) each and one closing linkage (71, 72) each, each of the two opening linkages (58, 57) having each an oblique front surface (58) provided on the thrust piston (42), which front surface interacts with an opposing surface (57) provided on the jaw for opening the respective jaw (14, 15), and with each of the two closing linkages (71, 72) having each a guide bevel (72) provided on the thrust piston (42), said guide bevel interacting respectively with a contact surface (71) provided on the jaw (14, 15) for closing the respective jaw (14, 15), the two jaws (14, 15) being positively locked in the closed position, characterized in that said thrust piston (42) is configured as a double-acting medium-actuated thrust piston (42), that the oblique surfaces (58) of the opening linkages (58, 57) can be brought into contact with the opposing surfaces (57) for opening; that the guide bevels (72) of the closing linkages (71, 72) interact by means of an associated rolling element (61) with the respective contact surface (71), and that during closing and with the jaws (14, 15) being in the closed position, the oblique front surfaces (58) are out of engagement with the opposing surfaces (57), the two closing linkages (71, 72) locking the jaws (14, 15) in the closed position in a self-locking manner.

2. Tool changer according to claim 1, characterized in that said rolling element (61) is a roller (61) that is inserted in a bore (62) extending in said respective jaw (14, 15) parallel to its pivot axis, in which bore the roller (61) is radially secured, with the bore (62) forming the contact surface (71) with its inner wall, and that the bore (62) has a continuous lengthwise slit running parallel to the pivot axis (16, 17), through which slit the roller (61) is at least in the closed position over a section (69) of its circumferential surface in contact with the respective associated guide bevel (72).

3. Tool changer according to claim 2, characterized in that there is provided in each jaw (14, 15) a channel (55) intersecting the bore (62) transversely and being open towards the respective other jaw (15, 14), into which channel the piston rod (51) projects with its free end (50) that points away from the thrust piston (42); and that the free end (50) of the piston rod (51) has at both of its sides facing the rollers (61) the guide bevels (72) that extend obliquely outward away from the thrust piston (42) at an angle (73) to the longitudinal axis (30), with the angle (73) being less than 15° and preferably less than 10°.

4. Tool changer according to claim 3, characterized in that the guide bevels (72) in the direction of the thrust piston (42) gradually merge into recesses (74) that are curved radially inward, in which the rollers (61) come to rest when the jaws (14, 15) are in their spread position.

5. Tool changer according to any of claims 1 - 4, characterized in that the piston rod (51) has the oblique front surfaces (58) at its end face (54) pointing away from the thrust piston, and that the opposing surfaces (57) provided on the jaws (14, 15) are aligned approximately radially with respect to the pivot axis (16, 17) of the respective jaw (14, 15).

6. Tool changer according to claims 3 and 5, characterized in that the end face (54) of the piston rod (51) is crowned in configuration, and that the opposing surfaces (57) are arranged in the respective channel (55) and are curved to correspond to the end face (54).

7. Tool changer according to any of claims 1 - 6, characterized in that each jaw (14, 15) has a contact surface that each interacts with an adjustable stop (77) in order to limit the closing movement of the jaws (14, 15).

8. Tool changer according to any of claims 1 - 7, characterized in that there is associated with each of the jaws (14, 15) a monitoring element (26, 27) to indicate the particular position of the jaw (14, 15).

9. Tool changer according to claim 8, characterized in that the monitoring element (26, 27) comprises an inductive proximity sensor (26, 27).

10. Tool changer according to any of claims 1 - 9, characterized in that the thrust piston (42) has at least one channel (80, 81), extending in the longitudinal axis (30) and discharging in the vicinity of the guide bevels (72), to supply the rolling elements (61) with a lubricant, with the channel (80) being closed when the gripper (13) is in operation.

## Revendications

1. Dispositif de changement d'outils (10) pour des outils (11) d'une machine-outil, avec un dispositif de préhension (13), sur lequel deux mâchoires mobiles (14, 15) sont disposées pour saisir l'outil (11) par engagement positif, sur lequel un piston de poussée (42) actionné par fluide est supporté dans le sens longitudinal en vue d'un coulissement axial, lequel fait pivoter les mâchoires autour de leur axe de pivotement (16, 17) respectif dans une position d'écartement pour l'introduction et le retrait des outils (11) et dans une position de fermeture pour la préhension par engagement positif des outils (11), et sur lequel sont disposés entre le piston de poussée (42) et chacune des deux mâchoires (14, 15) un engrenage d'ouverture (58, 57) et un engrenage de fermeture (71, 72), chacun des deux engrenages d'ouverture (58, 57) présentant une face oblique (58) prévue sur le piston de poussée (42), qui coopère, en vue de l'ouverture de la mâchoire (14, 15) correspondante, avec une contre-surface (57) prévue sur la mâchoire, et chacun des deux engrenages de fermeture (71, 72) présentant un biseau de guidage (72) prévu sur le piston de poussée (42), qui coopère, en vue de la fermeture de la mâchoire (14, 15) correspondante, avec une surface d'appui (71) disposée sur la mâchoire (14, 15), dans lequel les mâchoires (14, 15) sont verrouillées par engagement positif dans la position de fermeture, caractérisé en ce que le piston de poussée (42) est conçu comme un piston de poussée (42) actionné par fluide, à double effet, les faces obliques (58) des engrenages d'ouverture (58, 57) peuvent venir s'appuyer sur les contre-surfaces (57) pour l'ouverture, les biseaux de guidage (72) des engrenages de fermeture (71, 72) coopèrent, par l'intermédiaire d'un corps de roulement (61), avec la surface d'appui (71) correspondante, et les faces obliques (58) ne sont pas en prise avec les contre-surfaces (57) pendant la fermeture et dans la position de fermeture des mâchoires (14, 15), les deux engrenages de fermeture (71, 72) verrouillant les mâchoires (14, 15) de manière auto-bloquante dans la position de fermeture.

2. Dispositif de changement d'outils selon la revendication 1, caractérisé en ce que le corps de roulement (61) est un rouleau (61), qui est introduit dans un trou (62) ménagé dans chaque mâchoire (14, 15) parallèlement à l'axe de pivotement de celle-ci, dans lequel le rouleau (61) est fixé dans le sens radial, le trou (62) formant avec sa paroi intérieure la surface d'appui (71), et en ce que le trou (62) présente une fente longitudinale continue parallèle à l'axe de pivotement (16, 17), à travers laquelle le rouleau (61) s'appuie, au moins dans la position de fermeture, par une section (69) de sa surface de périphérie, sur le biseau de guidage (72) correspondant.

3. Dispositif de changement d'outils selon la revendication 2, caractérisé en ce qu'il est prévu dans chaque mâchoire (14, 15) un canal (55) coupant le trou (62) perpendiculairement et ouvert en direction de l'autre mâchoire (14, 15), dans lequel la tige de piston (51) dépasse par son extrémité libre (50) opposée au piston de poussée (42), et en ce que l'extrémité libre (50) de la tige de piston (51) présente sur ses deux côtés orientés vers les rouleaux (61) les biseaux de guidage (72), qui s'écartent du piston de poussée (42) en formant un angle (73) par rapport à l'axe longitudinal (30) en oblique vers l'extérieur, l'angle (73) étant plus petit que 15°, de préférence plus petit que 10°.

4. Dispositif de changement d'outils selon la revendication 3, caractérisé en ce que les biseaux de guidage (72) présentent une transition progressive en direction du piston de poussée (42) vers des évidements (74) voûtés vers l'intérieur dans le sens radial, dans lesquels les rouleaux (61) viennent reposer dans la position d'écartement des mâchoires (14, 15).

5. Dispositif de changement d'outils selon l'une quelconque des revendications 1 à 4, caractérisé en ce que la tige de piston (51) présente sur sa face (54), opposée au piston de poussée, les faces obliques (58) et en ce que des contre-surfaces (57) prévues sur les mâchoires (14, 15) sont orientées sensiblement dans le sens radial par rapport à l'axe de pivotement (16, 17) de chaque mâchoire (14, 15).

6. Dispositif de changement d'outils selon les revendications 3 et 5, caractérisé en ce que la face (54) de la tige de piston (51) a une forme bombée et en ce que les contre-surfaces (57) sont disposées dans le canal (55) correspondant et la face (54) est voûtée de façon correspondante.

7. Dispositif de changement d'outils selon l'une quelconque des revendications 1 à 6, caractérisé en ce que chaque mâchoire (14, 15) présente une surface de butée, qui coopère avec une butée (77) réglable, pour limiter le mouvement de fermeture des mâchoires (14, 15).

8. Dispositif de changement d'outils selon l'une quelconque des revendications 1 à 7, caractérisé en ce que chacune des mâchoires (14, 15) est associée à un organe de contrôle (26, 27) destiné à indiquer la position de chaque mâchoire (14, 15).

9. Dispositif de changement d'outils selon la revendication 8, caractérisé en ce que l'organe de contrôle (26, 27) présente un détecteur de proximité (26, 27) à induction.

10. Dispositif de changement d'outils selon l'une quelconque des revendications 1 à 9, caractérisé en ce que le piston de poussée (42) présente au moins un canal (80, 81) orienté dans le sens longitudinal (30) et débouchant à proximité des biseaux de guidage (72) pour l'alimentation des rouleaux (61) avec un lubrifiant, le canal (80) étant fermé pendant le fonctionnement du dispositif de préhension (13).
